# EUROPÄISCHE PATENTANMELDUNG

(11) **EP 2 420 131 A1**
(43) Veröffentlichungstag der Anmeldung: **22.02.2012**
(21) Anmeldenummer: 11006471.4
(22) Anmeldetag: 05.08.2011
(51) Int. Cl.: A01D 82/02

(54) **Vorrichtung zur Bearbeitung von Erntegut**

(30) Priorität: 16.08.2010 DE 202010011422 U
(71) Anmelder: Zahnradfabrik-Neviges Wolfgang Schmahl GmbH & Co., 42553 Velbert (DE)
(72) Erfinder: Schmahl, Matthias, 42489 Wülfrath (DE)
(74) Vertreter: Thoma, Michael

(57) **Zusammenfassung**

Die vorliegende Erfindung betrifft eine Vorrichtung zur Bearbeitung von Erntegut wie Mais, Getreide, Silage- oder ähnliches Körnergut, mit zumindest einer Bearbeitungswalze (9,10) zum Aufschließen des Ernteguts, die an ihrer Außenumfangsseite mit einer Profilierung (15) versehen ist, sowie einen Feldhäcksler (1) mit einem derartigen Körnerprozessor (8). Die Profilierung (15) ist dabei als Schrägverzahnung, insbesondere Pfeilverzahnung (17) mit Sägezahnprofil ausgebildet.

## Beschreibung

Die vorliegende Erfindung betrifft eine Vorrichtung zur Bearbeitung von Erntegut wie Mais, Getreide, Silage- oder ähnliches Körnergut, mit zumindest einer Bearbeitungswalze zum Aufschließen des Ernteguts, die an ihrer Außenumfangsseite mit einer Profilierung versehen ist. Die Erfindung betrifft dabei auch einen Feldhäcksler oder einen ähnlichen Körnerprozessor mit einer solchen Vorrichtung.

Derartig Prozessorvorrichtungen werden insbesondere bei Feldhäckslern eingesetzt, um das aufgenommene Erntegut aufzuschließen. Hierbei werden sog. Cracker-Walzen eingesetzt, die an ihrem Außenumfang mit einem Rippenprofil versehen sind, um Körnergut wie Mais aufzubrechen. Dabei rollen zwei rotatorisch angetriebene Cracker-Walzen aufeinander ab, so dass das zwischen den Walzen hindurchgeförderte Erntegut an den Kanten der Profilierung gequetscht und je nach Beabstandung der Walzen mehr oder minder stark aufgebrochen wird.

Hierbei entstehen relativ hohe Kräfte, insbesondere wenn das Erntegut nicht gleichmäßig über die Breite der Bearbeitungswalzen verteilt einläuft, sonder beispielsweise in einem Randbereich oder im Zentrum gehäuft anfällt. Dementsprechend wirken auf die Lager der Bearbeitungswalzen hohe Lagerkräfte, die durch entsprechend stabile Lager aufzufangen sind. Darüber hinaus kommt es insbesondere bei Bearbeitungswalzen größerer Breite auch zu einer Verformung der Walzen selbst, und zwar dahingehend, dass die an sich gerade Walzenachse eine leicht bogenförmige Verformung erfährt, was zusammen mit der Umlaufbewegung zu einer walkenden Beanspruchung der Walze und deren Lagerung führt.

Ungeachtet der Beanspruchung der Walze kommt es hierbei ebenfalls zu einer Beeinträchtigung der Erntegutbearbeitung, da das Erntegut in den Bereichen, in denen in der Zufuhr Häufungen entstehen, nicht mehr vollständig aufgeschlossen wird. Der Bearbeitungsgrade lässt nach, was auch noch durch einen vorzeitigen Verschleiß der Profilierung verschärft wird.

Eine Vorrichtung der eingangs genannten Art ist aus der DE 10 2008 012 487 A1 bekannt. Der darin gezeigte Prozessor umfasst zwei aufeinander abrollende Bearbeitungswalzen, die an ihrem Außenumfang mit linienförmigen Profilrippen parallel zur Walzenachse versehen sind. Die DE 33 02 980 C2 zeigt einen Feldhäcksler, bei dem die Prozessorwalzen in Kammeingriff stehen und mit einer Evolventenverzahnung versehen sein sollen. Ferner zeigt die DE 10 2005 053 049 B4 eine Zerkleinerungswalze für einen Feldhäcksler, die an ihrem Außenumfang mit einer unregelmäßigen Profilierung in Form von Granulatkörnern nach Art einer Schleifwalze versehen ist.

Hiervon ausgehend liegt der vorliegenden Erfindung die Aufgabe zugrunde, eine verbesserte Vorrichtung der eingangs genannten Art zu schaffen, die Nachteile des Standes der Technik vermeidet und Letzteren in vorteilhafter Weise weiterbildet. Insbesondere soll eine verbesserte, gleichmäßigere Bearbeitung des Guts bei gleichzeitig verringerten Bearbeitungs- und Reaktionskräften erreicht werden.

Erfindungsgemäß wird diese Aufgabe durch eine Vorrichtung nach Anspruch 1 sowie einen Feldhäcksler nach Anspruch 14 gelöst. Bevorzugte Ausgestaltungen der Erfindung sind Gegenstand der abhängigen Ansprüche.

Es wird also vorgeschlagen, die Profilierung derart auszuführen, dass es zu einer Querbewegung des Ernteguts an der Bearbeitungswalze kommt, so dass das Erntegut bei seiner Bewegung an der Walze vorbei bzw. durch die Walzen hindurch eine Bewegungskomponente parallel zur Rotationsachse der Walze bekommt bzw. es zu einer gleitenden Relativbewegung zwischen Erntegut und Walzenprofilierung kommt. Hierzu wird der Profilierung an der Außenumfangsfläche der Bearbeitungswalze eine Schrägung gegeben, so dass die Profilierung nicht mehr exakt parallel zur Rotationsachse verläuft. Erfindungsgemäß umfasst die Profilierung zumindest einen Profilabschnitt mit einem zur Walzenachse schrägen Profilverlauf mit linienförmigen Profilrippen. Insbesondere kann die Profilierung zumindest in einem Abschnitt eine Schrägverzahnung aufweisen, deren Zahnflanken zur Achsrichtung der Walze spitzwinklig geneigt verlaufen. Durch die Schrägung der Profilierung wird ein gleitendes Cracken des Ernteguts an den Profilkanten der Profilierung mit einer relativen Längsbewegungskomponente parallel zur Walzenachse erzielt, so dass das Erntegut nicht mehr nur zerdrückt, sondern auch zerschnitten bzw. abgeschert wird oder zumindest angeschnitten und angeschert wird. Hierdurch erfolgt nicht nur eine Vergleichmäßigung des Erntegutstroms über die Breite der Bearbeitungswalze, sondern auch eine Verringerung der quer zur Walzenachse wirkenden Bearbeitungs- und Reaktionskräfte, wodurch nicht nur die Lagerbeanspruchung, sondern auch eine Beanspruchung der Walze auf Verformung reduziert wird. Dies erlaubt es, die Bearbeitungswalzen leichter bzw. in einer weniger festen Ausführung auszubilden, wodurch entsprechend Gewicht eingespart werden kann. Überdies erhöht sich die Lebensdauer der Bearbeitungswalzen.

In Weiterbildung der Erfindung kann die Profilierung eine Pfeilverzahnung umfassen, die zwei gegenläufig orientierte Schrägverzahnungsabschnitt aufweist. Hierdurch kann einerseits das vorteilhafte, gleitende Cracken mit einer Längsbewegungskomponente erreicht werden, während andererseits Axialkräfte auf die Lager der Bearbeitungswalze vermieden werden. Durch die gegenläufig orientierten Schrägverzahnungsabschnitte kompensieren sich in Axialrichtung wirkende Reaktionskräfte. Zudem kann die Breitenverteilung des zu bearbeitenden Guts gezielt gesteuert werden, je nach Drehrichtung wahlweise dahingehend, dass das Erntegut bei schwadförmigem Einlauf in der Mitte zu den Seiten hin ausgebreitet und vergleichmäßigt wird, oder umgekehrt bei zu starkem seitlichen Einlauf zur Mitte hin konzentriert werden kann.

Je nach Bearbeitungsaufgabe und -gut kann die Profilierung mehr als zwei gegenläufig orientierte Schrägverzahnungsabschnitte aufweisen, beispielsweise vier oder sechs jeweils gegenläufig orientierte Schrägverzahnungsabschnitte, so dass die Bearbeitungswalze über ihre Länge betrachtet mehrere Pfeilverzahnungen umfasst. In vorteilhafter Weiterbildung der Erfindung kann die Profilierung aber auch aus nur einer Pfeilverzahnung mit zwei gegenläufig orientierten Schrägverzahnungsabschnitten bestehen.

In Weiterbildung der Erfindung ist die Pfeilverzahnung zwischen den beiden Schrägverzahnungsabschnitten mit einem Übergangsabschnitt versehen, in dem die Profilierung aus einer nicht allein einachsig schräg verlaufenden, sondern vorzugsweise mehrachsig orientierten Riffelung besteht, die vorzugsweise aus einer Überschneidung der gegenläufig orientierten Schrägverzahnungsabschnitt der Pfeilverzahnung bestehen kann. Hierdurch kann ein noch feineres Aufschließen des Bearbeitungsguts erreicht werden, da das in dem besagten Übergangsabschnitt zusammenlaufende Bearbeitungsgut von der dort vorgesehenen Riffelung nicht mehr gezielt entlang einer Kante aufgeschlossen wird, sondern hin- und hergehend von verschieden orientierten Kanten gequetscht bzw. beaufschlagt wird.

Je nach Bearbeitungsaufgabe und Ausbildung der vorauslaufenden und/oder nachlaufenden Aggregate kann die Bearbeitungswalze verschiedene Drehrichtungen aufweisen. Nach einer vorteilhaften Ausführung der Erfindung können die Schrägverzahnungsabschnitte der Pfeilverzahnung in Bezug zur Drehrichtung der Bearbeitungsachse derart orientiert sein, dass das Erntegut von der Pfeilverzahnung zu deren Übergangsabschnitt hin zusammengetrieben wird.

Der Schrägungswinkel der Profilierung relativ zu einer achsparallelen Geraden kann grundsätzlich verschieden gewählt sein. Um einerseits eine ausreichende

Förderwirkung zu erreichen und andererseits in ausreichendem Maße ein Quergleiten des Bearbeitungsguts zu erreichen, kann nach einem vorteilhaften Kompromiss in Weiterbildung der Erfindung ein Schrägungswinkel im Bereich von 10° bis 30°, vorzugsweise etwa 15° bis 25° vorgesehen sein.

Vorteilhafterweise kann der genannte Schrägungswinkel der Profilierung über zumindest jeweils einen Abschnitt der Profilierung konstant sein, so dass sich in dem Abschnitt jeweils gerade verlaufende Profilierungsrippen ergeben. Insbesondere kann die Profilierung aus jeweils gerade verlaufenden Profilrippen bestehen, die über ihre Länge betrachtet unter einem konstanten Schrägungswinkel zur Walzenlängsachse spitzwinklig geneigt angestellt sind. Alternativ oder zusätzlich kann die Profilierung jedoch auch zumindest einen Abschnitt umfassen, in dem der genannte Schrägungswinkel der Profilierung über die Länge der Walze, d.h. in Richtung ihrer Rotationsachse, variiert, so dass sich ein geschwungenes, gekrümmtes Profilierungsprofil ergibt. Dies kann insbesondere dazu genutzt werden, in den Randbereichen der Walze eine andere, insbesondere stärkere Querförderwirkung der Profilierung als in einem zentralen Abschnitt der Walze vorzusehen. Um eine einfache Fertigung der Bearbeitungswalze zu ermöglichen, ist es jedoch bevorzugt, gerade verlaufende Profilierungsrippen mit konstant bleibendem Schrägungswinkel vorzusehen.

Die schräg verlaufenden Rippen können hierbei unterschiedliche Querschnittsprofile besitzen, um das Aufschließen an das jeweils zu bearbeitende Gut anzupassen. Vorteilhafterweise können die Profilrippen im Querschnitt betrachtet ebene Zahnflanken aufweisen, die spitzwinklig zusammenlaufen und eine linienförmige Zahnspitze bilden. Prinzipiell können auch Zähne mit balligen oder leicht rinnenförmigen Flanken und/oder abgerundeten Kopfabschnitten vorgesehen sein. Die genannte Ausbildung mit ebenen Zahnflanken und linienförmiger, im Wesentlichen nicht abgerundeter Zahnspitze kombiniert jedoch eine gute Aufbruchwirkung mit einer guten Längsführungs- bzw. -transportwirkung, da die Körner an den ebenen Zahnflanken flächig gedrückt werden und auf den spitzen Zahngraten entlanggleiten können. Nach einer vorteilhaften Ausführung der Erfindung kann dabei eine Schrägverzahnung mit einem Sägezahnprofil vorgesehen sein, dessen Zahnflanken zur Radialen unterschiedlich stark geneigt sind, d.h. eine Flanke eines Sägezahns ist steiler geneigt als die andere Flanke des jeweiligen Sägezahns. Insbesondere kann hier vorgesehen sein, dass eine vorauslaufende Flanke eines Sägezahns steiler angeordnet ist als die nachlaufende Flanke dieses Sägezahns. Vorauslaufend und nachlaufend meint hierbei jeweils die bezüglich der Drehrichtung vorne bzw. hinten liegende Flanke. Mit dem genannten Neigungswinkel zur Radialen ist hierbei der Anstellwinkel der jeweiligen Zahnflanke zu einer radial verlaufenden Geraden durch die Spitze des jeweiligen Sägezahns gemeint.

Nach einer vorteilhaften Ausführung der Erfindung können die vorauslaufenden Flanken der Sägezahnprofilierung um zumindest 10° steiler angestellt sein als die nachlaufenden Flanken. Nach einer vorteilhaften Ausbildung der Erfindung können die vorauslaufenden Flanken unter einem Winkel im Bereich von 5° bis 20° zur Radialen geneigt sein, während die nachlaufenden Flanken unter einem Winkel im Bereich von 20° bis 40° zur Radialen geneigt sein können.

Die Größe und Teilung der Profilierung wird vorteilhafterweise ebenfalls in Abhängigkeit der Bearbeitungsaufgabe und des Bearbeitungsguts gewählt. Um für gängige Bearbeitungsmaterialien wie beispielsweise Mais, Silagegut oder Getreide eine gute Aufschließwirkung zu erzielen, ist nach einer vorteilhaften Weiterbildung der Erfindung eine Zahnhöhe im Bereich von 0,5 bis 1,5, vorzugsweise 0,6 bis 1,0 mm vorgesehen, wobei eine Zahnteilung im Bereich von 5 bis 10, vorzugsweise etwa 7 bis 8 mm vorgesehen sein kann. Je nach Bearbeitungsaufgabe können auch andere Dimensionierungen der Verzahnung vorgesehen sein.

Um eine ausreichend feine Crack-Wirkung bei Körnern wie Mais und Getreide gleichermaßen zu erreichen, ist die Zähnezahl der Cracker-Walze größer als 50, vorzugsweise größer als 75, wobei sie insbesondere etwa 50 bis 150 betragen kann.

Die vorliegende Erfindung wird nachfolgend anhand eines bevorzugten Ausführungsbeispiels und zugehöriger Zeichnungen näher erläutert. In den Zeichnungen zeigen:
- Fig. 1:: eine schematische, perspektivische Darstellung einer Bearbeitungswalze zur Bearbeitung von Erntegut nach einer vorteilhaften Ausführung der Erfindung,
- Fig. 2:: eine Draufsicht auf die Bearbeitungswalze aus Fig. 1, die die Schrägung der Pfeilverzahnung der Bearbeitungswalze zeigt,
- Fig. 3:: eine Schnittansicht der Bearbeitungswalze entlang der Linie B-B in Fig. 2,
- Fig. 4:: eine ausschnittsweise, vergrößerte Schnittansicht des Zahnprofils zur Verdeutlichung der Zahngeometrie,
- Fig. 5:: eine ausschnittsweise, vergrößerte Draufsicht auf den Übergangsbereich zwischen den gegenläufigen Schrägverzahnungsabschnitten der Pfeilprofilierung, und
- Fig. 6:: eine schematische Gesamtansicht eines Feldhäckslers mit Bearbeitungswalzen aus den vorhergehenden Figuren.

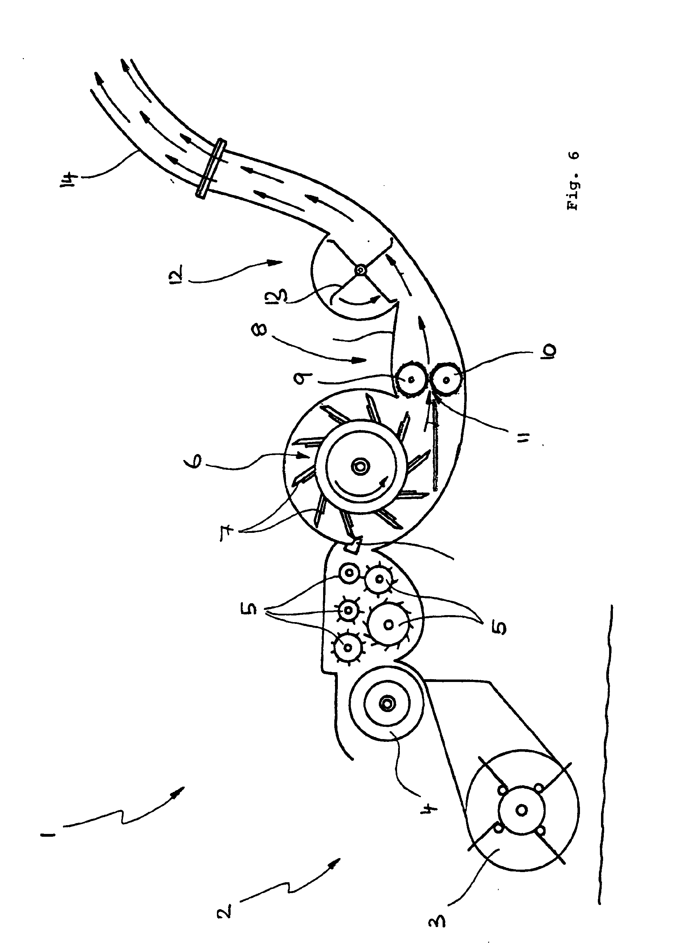

Der in Fig. 6 schematisch dargestellte Feldhäcksler 1 umfasst eine Zuführeinrichtung 2, die über einen Aufnehmer 3 beispielsweise in Form einer Stachelwalze Erntegut vom Boden aufnimmt und über eine Querförderschnecke 4 und Transportwalzen 5 das Erntegut in die Häckseleinrichtung 6 fördert. Die genannte Häckseleinrichtung 6 kann in an sich bekannter Weise einen Messerrotor mit Häckselmessern 7 umfassen, die das zu bearbeitende Gut zerkleinern.

Der genannten Häckseleinrichtung 6 nachgeordnet, d.h. in Förderrichtung hinter bzw. stromab der Häckseleinrichtung 6 angeordnet ist eine Prozessoreinrichtung 8 zur Bearbeitung des geschnittenen Ernteguts wie Mais, Silagegut, Getreide oder Körnergut, wobei die genannte Prozesseinrichtung 8 ein Paar gegenläufig antreibbare Bearbeitungswalzen 9, 10 umfasst, die zueinander parallel angeordnet sind und zwischen sich einen Förderspalt 11 begrenzen, durch den hindurch das von der Häckseleinrichtung 6 kommende Erntegut gefördert wird.

Nachdem das zerkleinerte Bearbeitungsgut durch die Prozessoreinrichtung 8 aufgeschlossen, angequetscht bzw. zerquetscht ist, wird das Erntegut von einem Beschleuniger 12, der in der gezeichneten Ausführung eine Flügelwalze 13 aufweist, erfasst, beschleunigt und durch den Auswurfkrümmer 14 ausgeworfen.

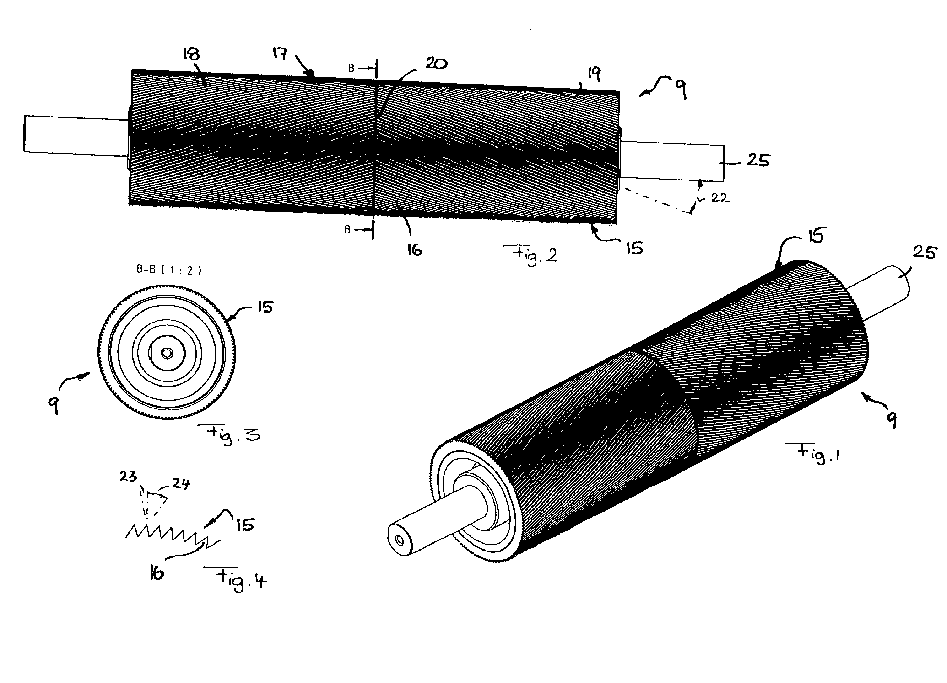

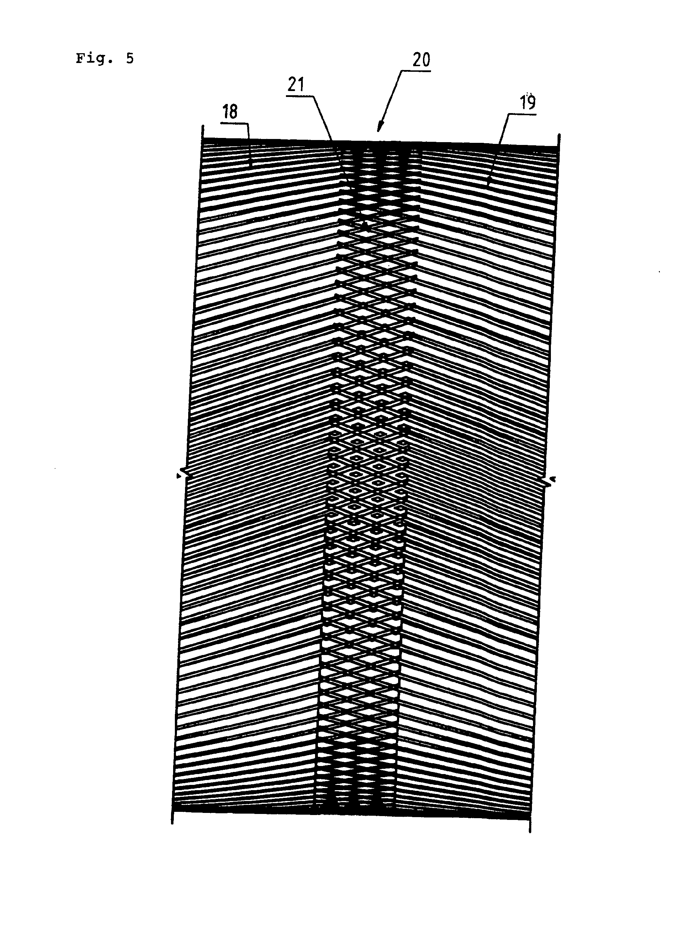

Die Bearbeitungswalzen 9 und 10 der Prozessoreinrichtung 8 sind in den Figuren 1 bis 5 näher dargestellt. Jede der Bearbeitungswalzen 9 und 10 ist an ihrer Außenumfangsfläche mit einer Profilierung 15 versehen, die linienförmig verlaufende Profilrippen umfasst. Die besagten Profilrippen 16 werden von dem Zahnprofil einer Pfeilverzahnung 17 gebildet, die zwei gegenläufig orientierte Schrägverzahnungsabschnitte 18, 19 umfasst, die in einem Mittelabschnitt bzw. Übergangsabschnitt 20 zusammenlaufen, in dem die Profilierung 15 aus einer Riffelung 21 besteht, die Fig. 5 zeigt. In der gezeichneten Ausführung sind die beiden Schrägverzahnungsabschnitte 18, 19 gleich groß ausgebildet und erstrecken sich jeweils über etwa die Hälfte der Bearbeitungswalze 9, 10, so dass die Pfeilverzahnung 17 symmetrisch bezüglich der Walze ausgebildet ist.

In der gezeichneten Ausführungsform sind die Zahnprofile der Schrägverzahnungsabschnitte 18 und 19 jeweils unter einem Schrägungswinkel 22 relativ zu einer achsparallelen Geraden angeordnet, wobei der genannte Schrägungswinkel 22 in der gezeichneten Ausführung 20° beträgt.

Die Schrägverzahnungsabschnitte 18 und 19 sind hierbei vorteilhafterweise mit einer Sägezahnprofilierung versehen, wie dies Fig. 4 zeigt. Die Sägezähne der genannten Schrägverzahnungsabschnitte 18 und 19 umfassen hierbei unterschiedlich geneigte Zahnflanken, wobei in der gezeichneten Ausführung die vorauslaufenden Flanken unter einem Zahnflankenwinkel 23 von etwa 10° bis 15° und die nachlaufenden Flanken unter einem Zahnflankenwinkel 24 von etwa 25° bis 35° zur Radialen, die durch die Zahnspitze verläuft, geneigt sind, vgl. Fig. 4. In der gezeichneten Ausführung ist hierbei eine Zahnhöhe von etwa 5 bis 10 mm, insbesondere etwa 8 mm vorgesehen.

Wie Fig. 5 zeigt, besitzt die Riffelung 21 des Übergangsabschnitts 20 zwischen den Schrägverzahnungsabschnitten 18 und 19 der Pfeilverzahnung 17 eine mehrachsig orientierte Konturierung, die durch die Überschneidung der Schrägverzahnungsabschnitte gebildet wird.

## Patentansprüche

1. Vorrichtung zur Bearbeitung von Erntegut wie Mais, Silagegut, Getreide oder Körnergut, mit zumindest einer Bearbeitungswalze (9, 10) zum Aufschließen des Ernteguts, die an ihrer Außenumfangsfläche mit einer Profilierung (15) versehen ist, **dadurch gekennzeichnet, dass** die Profilierung (15) zumindest in einem Abschnitt einen zur Richtung der Walzenachse (25) schrägen Profilverlauf mit linienförmigen Profilrippen (16) aufweist.

2. Vorrichtung nach dem vorhergehenden Anspruch, wobei der schräge Profilverlauf mit linienförmigen Profilrippen (16) als Schrägverzahnung ausgebildet ist.

3. Vorrichtung nach einem der vorhergehenden Ansprüche, wobei die Profilierung (15) eine Pfeilverzahnung (17) umfasst, die zwei gegenläufig orientierte Schrägverzahnungsabschnitte (18, 19) aufweist.

4. Vorrichtung nach dem vorhergehenden Anspruch, wobei die Pfeilverzahnung (17) zwischen den beiden Schrägverzahnungsabschnitten (18, 19) einen Übergangsabschnitt (20) mit einer Riffelung (21) aufweist, die vorzugsweise aus einer Überschneidung der gegenläufig orientierten Schrägverzahnungen besteht.

5. Vorrichtung nach einem der beiden vorhergehenden Ansprüche, wobei die Schrägverzahnungsabschnitte (18, 19) der Pfeilverzahnung (17) in Bezug zur Drehrichtung der Bearbeitungswalze (9, 10) derart orientiert ist, dass das Erntegut zum Übergangsabschnitt (20) zwischen den Teilverzahnungsabschnitten hin zusammengetrieben wird.

6. Vorrichtung nach einem der vorhergehenden Ansprüche, wobei die linienförmigen Profilrippen (16) der Profilierung (15) einen geraden Verlauf besitzen und/oder ein Schrägungswinkel (22) der Profilrippen (16) gegenüber der Richtung der Walzenachse (25) entlang der Profilrippen (16) konstant ist.

7. Vorrichtung nach einem der vorhergehenden Ansprüche, wobei der schräge Profilverlauf einen Schrägungswinkel (22) gegenüber der Richtung der Walzenachse (25) im Bereich von 10° bis 30°, vorzugsweise etwa 15° bis 25°, besitzt.

8. Vorrichtung nach einem der vorhergehenden Ansprüche, wobei die Profilrippen (16) im Querschnitt betrachtet ein Zahnprofil aufweisen, das gerade/eben konturierte Zahnflanken, die zueinander spitzwinklig angestellt sind und in einer linienförmigen Zahnspitze zusammenlaufen, umfasst.

9. Vorrichtung nach einem der vorhergehenden Ansprüche, wobei die schräge Profilierung mit einem Sägezahnprofil ausgebildet ist, dessen Zahnflanken zur Radialen unterschiedlich stark geneigt sind, wobei vorzugsweise Zahnflankenwinkel (23, 24) der genannten Zahnflanken um zumindest 10° voneinander differieren und/oder vorauslaufenden Zahnflanken steiler angestellt sind.

10. Vorrichtung nach einem der vorhergehenden Ansprüche, wobei eine Zahnhöhe im Bereich von 5 bis 15, vorzugsweise 6 bis 10 mm, vorgesehen ist und eine Zahnteilung im Bereich von etwa 5 mm bis 10 mm, vorzugsweise etwa 7 bis 8 mm vorgesehen ist.

11. Vorrichtung nach einem der vorhergehenden Ansprüche, wobei die Profilierung (15) mehr als 50, vorzugsweise mehr als 75 Zähne, über den Umfang verteilt aufweist.

12. Vorrichtung nach einem der vorhergehenden Ansprüche, wobei ein Paar Bearbeitungswalzen (9, 10) zueinander parallel angeordnet sind und miteinander in Kammeingriff stehen und gegenläufig umlaufen.

13. Vorrichtung nach einem der vorhergehenden Ansprüche, wobei die zumindest eine Bearbeitungswalze (9, 10) stromab einer Häckseleinrichtung (6) zum Zerkleinern des Ernteguts angeordnet ist.

14. Landwirtschaftlicher Körnerprozessor, insbesondere Feldhäcksler, mit einer Vorrichtung nach einem der vorhergehenden Ansprüche.
